# EUROPEAN PATENT APPLICATION

(11) **EP 4 826 945 A1**
(43) Date of publication of application: **21.10.2026**
(21) Application number: 25867301.1
(22) Date of filing: 25.06.2025
(51) Int. Cl.: H02J 3/38, H02J 3/32, H02M 7/42

(54) **ENERGY ADJUSTMENT METHOD AND APPARATUS, AND INVERTER AND STORAGE MEDIUM**

(30) Priority: 28.02.2025 CN 202510239977
(71) Applicant: Sineng Electric Co., Ltd., Wuxi, Jiangsu 214174 (CN); Suzhou Qiancheng New Energy Technology Co., Ltd., Suzhou, Jiangsu 215101 (CN)
(72) Inventor: DING, Jiajie, Wuxi, Jiangsu 214174 (CN); LV, Hongchang, Wuxi, Jiangsu 214174 (CN); REN, Taoyi, Wuxi, Jiangsu 214174 (CN); TIAN, Kang, Wuxi, Jiangsu 214174 (CN); FANG, Lunqing, Wuxi, Jiangsu 214174 (CN); LIU, Baodong, Wuxi, Jiangsu 214174 (CN); MA, Jie, Wuxi, Jiangsu 214174 (CN); XIAO, Liujie, Wuxi, Jiangsu 214174 (CN)
(74) Representative: Bayramoglu et al.
(86) International application number: PCT/CN2025/103492
(87) International publication number: WO 2026/179016

(57) **Abstract**

This application is applicable to the field of inverter technologies, and provides an energy adjustment method and apparatus, an inverter, and a storage medium. The method includes: obtaining a target operation mode that is set for each connected device of a target inverter, where the connected device includes at least one of an input source device, a load device, and an extended accessory device; performing mode compatibility on the target operation mode of each connected device, and determining an energy transfer relationship among connected devices in the target operation mode; and when a change in an operating condition is detected during operation of the target operation mode, adjusting the energy transfer relationship to balance an energy transfer state between the input source device and the load device. Problems of rapid energy switching and fast mode compatibility are resolved, thereby implementing safe and stable switching of an external connected device of an inverter.

## Description

### TECHNICAL FIELD

This application pertains to the field of inverter technologies, and in particular, to an energy adjustment method and apparatus, an inverter, and a storage medium.

### BACKGROUND

Currently, for energy devices such as a photovoltaic inverter and a photovoltaic hybrid energy storage inverter, a method for introducing a connected device includes:
(1) An external control device is used to control the connected device. In this manner, costs increase and an effect is poor.
(2) The connected device is connected to an inverter, but a connection quantity or type is limited. Scalability of supported connected devices is poor.
(3) In the case of dynamically switching or switching a connected device, the inverter needs to be shut down or the entire system needs to be re-equipped. Quick solution switching is not supported, and there is a risk of energy imbalance or overflow.

When a function of an energy system that includes an inverter is complex, and there is a higher requirement for energy switching and connection and exit responses of a connected device, a conventional technology cannot meet a quick energy adjustment response in the case of abnormal power-off of a device, an emergency explosion or fire, quick trace of an on-site problem, and the like. Therefore, there is an urgent need in this field to provide a solution for adjusting a connected device of a complex energy system, so as to automatically switch an operation mode of an external connected device of an inverter quickly, safely, and stably when different devices are connected.

### TECHNICAL PROBLEMS

An objective of embodiments of this application is to provide an energy adjustment method, so as to resolve problems of rapid energy switching and fast mode compatibility, thereby implementing safe and stable switching of an external connected device of an inverter.

### TECHNICAL SOLUTIONS

Embodiments of this application are implemented as follows: An energy adjustment method includes:
obtaining a target operation mode that is set for each connected device of a target inverter, where the connected device includes at least one of an input source device, a load device, and an extended accessory device;
performing mode compatibility on the target operation mode of each connected device, and determining an energy transfer relationship among connected devices in the target operation mode;
detecting whether an operating condition changes during operation of the target operation mode; and
when a change in the operating condition is detected, adjusting the energy transfer relationship to balance an energy transfer state between the input source device and the load device.

Still further, the energy adjustment method further includes:
obtaining a first operation mode of the target inverter and a second operation mode of each connected device; and
performing mode compatibility between the first operation mode and each second operation mode, so that an energy configuration parameter of the first operation mode matches an energy configuration parameter of the second operation mode.

Still further, the energy adjustment method further includes:
detecting a connected device and a function of the connected device that are supported by the target inverter; and
obtaining the first operation mode of the target inverter and the second operation mode of each connected device based on the connected device and the function of the connected device that are supported by the target inverter.

Still further, the input source device includes at least one of a mains supply, a photovoltaic power supply, a battery, and a generator; the load device includes at least one of a charging pile, a heat pump, and a smart load; and the extended accessory device includes a smart junction box configured to extend a hardware function of the target inverter.

Still further, a case in which the operating condition changes includes an abnormality of the input source device; and
the adjusting the energy transfer relationship to balance an energy transfer state between the input source device and the load device includes:
switching to another input source device to adjust the energy transfer relationship, to balance the energy transfer state between the input source device and the load device.
Still further, a case in which the operating condition changes includes switching each connected device from the target inverter to the extended accessory device; and
the adjusting the energy transfer relationship to balance an energy transfer state between the input source device and the load device includes:
   sending a shutdown instruction to each connected device, so that each connected device is released, the energy transfer relationship is disconnected, and the target inverter remains in a running state.
   Still further, a case in which the operating condition changes includes occurrence of a transient energy shock; and
   the adjusting the energy transfer relationship to balance an energy transfer state between the input source device and the load device includes:
      switching to another input source device or adjusting an energy configuration parameter of the load device to adjust the energy transfer relationship, to balance the energy transfer state between the input source device and the load device.

An embodiment of this application further provides an energy adjustment apparatus, including:
an obtaining module, configured to obtain a target operation mode that is set for each connected device of a target inverter, where the connected device includes at least one of an input source device, a load device, and an extended accessory device;
a determining module, configured to: perform mode compatibility on the target operation mode of each connected device, and determine an energy transfer relationship among connected devices in the target operation mode; and
an adjustment module, configured to: detect whether an operating condition changes during operation of the target operation mode; and when a change in the working condition is detected, adjust the energy transfer relationship to balance an energy transfer state between the input source device and the load device.

An embodiment of this application further provides an inverter, including:
at least one processor; and
a memory communicatively connected to the at least one processor, where
the memory stores instructions that are executable by the at least one processor, and the instructions are executed by the at least one processor, to enable the at least one processor to perform the energy adjustment method.

An embodiment of this application further provides a computer-readable storage medium, storing a computer program, where the computer program is executed by a processor to implement the energy adjustment method.

This application performs mode compatibility on the target operation modes set for each connected device of a target inverter, and determines the energy transfer relationship among connected devices in the target operation mode. When a change in operating condition is detected during operation of the target operation mode, the energy transfer relationship is adjusted to balance the energy transfer state between input source devices and load devices. This application meets requirements for rapid energy switching and fast mode compatibility, thereby providing an effective solution for safe and stable switching of external connected devices of the inverter.

### BRIEF DESCRIPTION OF DRAWINGS

To describe the technical solutions in embodiments of this application more clearly, the following briefly describes the accompanying drawings that need to be used in the embodiments or exemplary technical descriptions. Clearly, the accompanying drawings in the following descriptions show merely some embodiments of this application, and a person of ordinary skill in the art may still derive other drawings from these accompanying drawings without creative efforts.
FIG. 1 is a flowchart of an energy adjustment method according to an embodiment of this application;
FIG. 2 is a schematic diagram of an energy matrix according to an embodiment of this application;
FIG. 3 is a schematic diagram of an energy matrix variation according to an embodiment of this application;
FIG. 4 is a schematic diagram of another energy matrix variation according to an embodiment of this application;
FIG. 5 is a schematic diagram of another energy matrix variation according to an embodiment of this application;
FIG. 6 is a schematic diagram of another energy matrix variation according to an embodiment of this application;
FIG. 7 is a schematic diagram of an energy adjustment apparatus according to an embodiment of this application;
FIG. 8 is a schematic diagram of embedding of software and hardware platforms according to an embodiment of this application; and
FIG. 9 is a schematic flowchart of performing an energy adjustment method according to an embodiment of this application.

### IMPLEMENTATIONS OF THE PRESENT INVENTION

To make the objectives, technical solutions, and advantages of this application clearer, the following further describes this application in detail with reference to the accompanying drawings and embodiments. It should be understood that specific embodiments described herein are merely used to explain this application, but are not intended to limit this application.

It should be noted that when a component is referred to as being "fastened to" or "disposed on" another component, the component may be directly or indirectly on the another component. When a component is referred to as being "connected to" another component, the component may be directly or indirectly connected to the another component. An orientation or a positional relationship indicated by terms such as "up", "down", "left", and "right" is an orientation or a positional relationship shown based on the accompanying drawings, and is merely intended for ease of description, rather than indicating or implying that the apparatus or element indicated must have a specific orientation or be constructed and operated in a specific orientation, and therefore should not be understood as a limitation on this application. A person of ordinary skill in the art can understand specific meanings of the foregoing terms based on an actual situation. Terms "first" and "second" are merely intended for ease of description, and should not be understood as indicating or implying relative importance or implicitly indicating a quantity of technical features. "A plurality of" means two or more, unless otherwise specifically defined.

To describe the technical solutions provided in this application, the following provides detailed description with reference to specific accompanying drawings and embodiments.

This application is applicable to a complex system with a plurality of input sources and a plurality of operation modes. Compared with the conventional technology, each connected device can be controlled by determining an energy transfer relationship among connected devices in a target operation mode, without using an external control device. Quick switching of different energy transfer solutions is implemented based on a change of an operating condition, thereby avoiding a risk of energy imbalance or overflow, and significantly improving response of energy adjustment. Because an extended accessory device is connected, scalability of a connected device supported by an inverter may be further improved, a connection quantity or type is not limited, and dynamic switching is implemented without requiring shutdown or re-equipping the entire system.

### Embodiment 1

This embodiment provides an energy adjustment method, which may be applied to an electronic device that has communication, calculation, and data storage capabilities. In actual application, the method in this embodiment may be applied to an electronic device such as an energy device, and is specifically applied to a real-time operating system for an embedded computer in the energy device, and is implemented by a computer program. The energy device is, for example, an inverter. The inverter includes an inverter device providing energy, such as a photovoltaic inverter and a photovoltaic hybrid energy storage inverter. In a scenario of a complex energy system with a plurality of input sources and a plurality of connected devices, for a case in which energy needs to be re-adjusted due to re-connection of a device or disconnection of a connected device, and the like, requirements for rapid energy switching and fast mode compatibility are met, thereby providing a solution for safe and stable switching of an external connected device of an inverter, and meeting energy adjustment in the case of abnormal power-off of a device, an emergency explosion or fire, quick trace of an on-site problem, and the like.

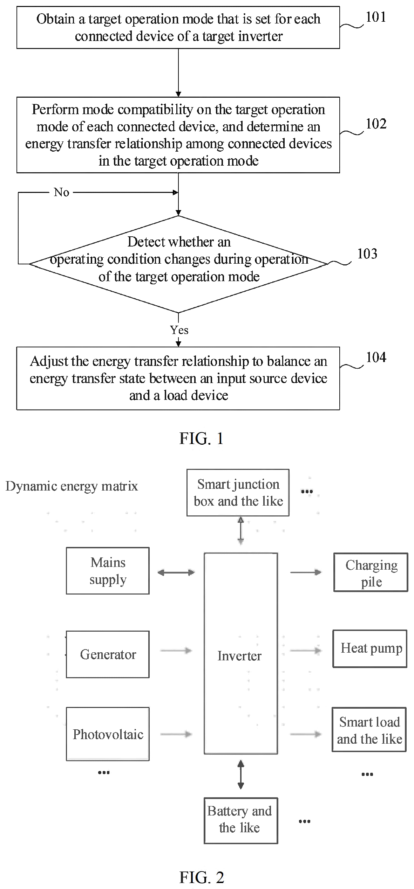

As shown in FIG. 1, a specific procedure of an energy adjustment method in this embodiment may include:
Step 101: Obtain a target operation mode that is set for each connected device of a target inverter.

The connected device includes at least one of an input source device, a load device, and an extended accessory device.

In a specific implementation, the input source device includes at least one of a mains supply, a photovoltaic power supply, a battery, and a generator, or includes other clean energy. The load device includes at least one of a charging pile, a heat pump, and a smart load. The extended accessory device includes a smart junction box configured to extend a hardware function of the target inverter, for example, a BI (backup interface, backup interface) smart junction box. During use, the smart junction box may be connected to the input source device, the load device, another inverter, another extended accessory device, and the like, to extend the hardware function of the inverter.

In some specific implementations, the energy adjustment method in this embodiment further includes:
detecting a connected device and a function of the connected device that are supported by the target inverter; and
obtaining the first operation mode of the target inverter and the second operation mode of each connected device based on the connected device and the function of the connected device that are supported by the target inverter.

After the device is powered on and runs, the system detects software and hardware functions currently supported by the target inverter, and also determines a connected device and a function of the connected device that are supported by the target inverter. Based on a detection result, the system obtains an operation mode of the corresponding connected device, and obtains an operation mode of the target inverter, so as to subsequently perform mode compatibility between the target inverter and the connected device conveniently, thereby avoiding a running abnormality of the energy system due to a mismatch between operation modes configured for the target inverter and the connected device.

The energy adjustment method in this embodiment may further include:
obtaining a first operation mode of the target inverter and a second operation mode of each connected device; and
performing mode compatibility between the first operation mode and each second operation mode, so that an energy configuration parameter of the first operation mode matches an energy configuration parameter of the second operation mode.

In this embodiment, matching is performed between related energy configuration parameters of operation modes of the target inverter and each connected device, so as to implement mode compatibility. For example, the energy configuration parameters are a power and a timing time period.

In an example, an output power of the target inverter in the first operation mode is 3 kw, and a power required by the charging pile in the second operation mode is 5 kw. After mode compatibility processing, the output power of the target inverter in the first operation mode is matched as the power required by the charging pile in the second operation mode, so as to ensure normal running of the charging pile and ensure energy balance.

Step 102: Perform mode compatibility on the target operation mode of each connected device, and determine an energy transfer relationship among connected devices in the target operation mode.

In a specific implementation, performing mode compatibility on the target operation mode of each connected device means that when different connected devices are connected to the target inverter, an energy flow direction between the input source device and the load device is determined based on target operation modes of the input source device and the load device that are set by the user, so as to determine an energy transfer relationship between the connected devices in the target operation modes. This energy transfer relationship is referred to as an energy matrix. In an example, the energy matrix is shown in FIG. 2. Devices such as a mains supply, a generator, a photovoltaic power supply, and a smart junction box are connected to an inverter. A corresponding energy transfer relationship is formed between these devices based on a specified target operation mode.

During actual running, because an operating condition may change or each connected device is switched to an extended accessory device to meet a function extension requirement, the energy matrix may be adjusted accordingly, so that a state of energy transfer between an input source device and a load device is always in a balanced state, thereby implementing quick switching of the energy matrix and avoiding a risk of energy imbalance or overflow. A smart junction box is used as a connected device, and adjustment of the energy matrix is uniformly performed by the inverter, so that scalability of the connected device supported by the inverter is significantly improved, and a quantity or a type of the connected device is no longer limited.

Step 103: Detect whether an operating condition changes during operation of the target operation mode; and when a change in the working condition is detected, perform step 104.

Step 104: Adjust the energy transfer relationship to balance an energy transfer state between the input source device and the load device.

In a specific implementation, that the operating condition changes includes: During energy transfer between the input source device and the load device based on the target operation modes of the input source device and the load device, the load device no longer needs energy.

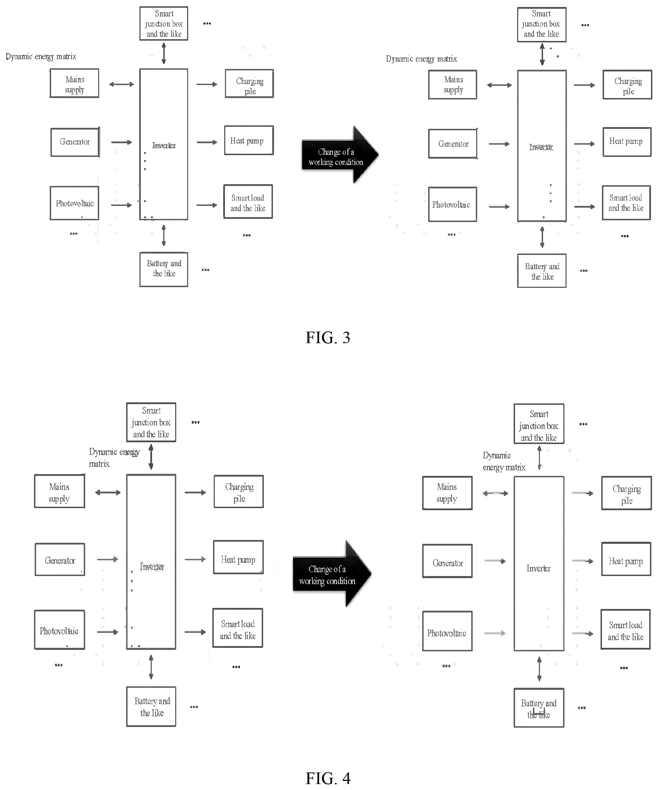

Using an energy matrix variation shown in FIG. 3 as an example, a photovoltaic power supply PV, a battery, a mains supply, a generator, and a charging pile are connected to the target inverter. A target operation mode of the battery is a self-generation and self-consumption mode, and a target operation mode of the charging pile is a charging precedence mode. In such a target operation mode, the energy matrix is as follows: The battery and the PV charge the charging pile based on a specified power until a vehicle is fully charged. After the vehicle is fully charged, the operating condition changes. In this case, the energy matrix is adjusted as follows: The PV charges the battery, and sends excess power to a power grid.

In a specific implementation, that the operating condition changes further includes: switching of different working states caused by the target operation mode of the input source device during energy transfer between the input source device and the load device based on the target operation modes of the input source device and the load device.

For example, a battery, a mains supply, a generator, and a charging pile are connected to the target inverter. A target operation mode of the battery is a fixed-time charging/discharging mode, and a target operation mode of the charging pile is a green power mode. In such a target operation mode, the energy matrix is as follows: The PV and the power grid fixedly charge the battery, and charge the charging pile by using excess power. When the working state of the battery is changed to fixed discharging, the operating condition changes and the energy matrix is adjusted as follows: The PV and the battery charge the charging pile, and send excess power to the power grid. When the battery is static, the operating condition changes again and the energy matrix is adjusted as follows: Only the PV charges the charging pile.

In a specific implementation, that the operating condition changes further includes: switching of different working states caused by the target operation mode of the load device during energy transfer between the input source device and the load device based on the target operation modes of the input source device and the load device.

Using an energy matrix variation shown in FIG. 4 as an example, a battery, a mains supply, a generator, a charging pile, and a heat pump are connected to the target inverter. A target operation mode of the battery is an off-grid mode, and a target operation mode of the heat pump is a timing mode. In such a target operation mode, an energy matrix is as follows: The battery, the PV, and the generator supply power to the heat pump in a fixed time period, and the generator supplies power to the heat pump only when a power is insufficient. When the timing for the heat pump stops, the operating condition changes. In this case, the energy matrix is adjusted as follows: The generator is turned off, and the PV charges the battery.

When the input source device is abnormal, because the operating condition is abnormal, in this case, the adjusting the energy transfer relationship to balance an energy transfer state between the input source device and the load device includes:
switching to another input source device to adjust the energy transfer relationship, to balance the energy transfer state between the input source device and the load device.

In a specific implementation, that the operating condition changes further includes an abnormality of the input source device.

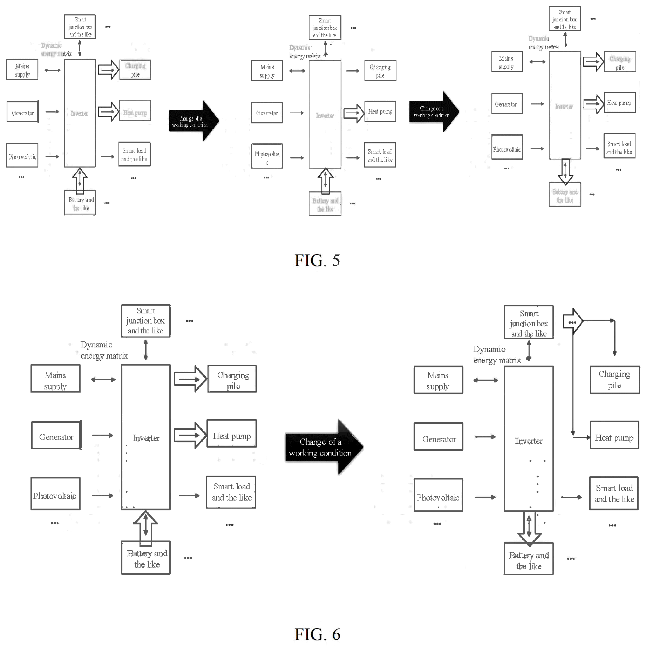

Using an energy matrix variation shown in FIG. 5 as an example, a battery, a mains supply, a generator, a charging pile, and a heat pump are connected to the target inverter. A target operation mode of the battery is a self-generation and self-consumption mode, a target operation mode of the charging pile is a green power mode, and a target operation mode of the heat pump is a smart load mode in the timing mode. In such a target operation mode, the energy matrix is as follows: The PV and the battery supply power to the charging pile within a fixed time, and the heat pump is enabled when an on-grid power of excess power is greater than a power required in the smart load mode. If there is still excess power, the charging pile is charged by using the excess power. If there is still excess power, the excess power is sent to the power grid. When the power grid is abnormal (for example, power failure, leakage of a device, and disconnection of a circuit breaker), the operating condition changes. In this case, power is supplied by switching to the generator. The PV and the battery supply power to the charging pile within a fixed time, and the heat pump is enabled when a power of excess power is greater than the power required in the smart load mode. If there is still excess power, the charging pile of the vehicle is charged by using the excess power. If there is still excess power, the power of the battery is reduced until the battery is fully charged or the charging of the battery is completed, to pull down the power of the PV.

In a specific implementation, that the operating condition changes further includes switching each connected device from the target inverter to the extended accessory device. Correspondingly, the adjusting the energy transfer relationship to balance an energy transfer state between the input source device and the load device includes: when each connected device needs to be switched from the target inverter to the extended accessory device, sending a shutdown instruction to each connected device, so that each connected device is released, the energy transfer relationship is disconnected, and the target inverter remains in a running state.

Using an energy matrix variation shown in FIG. 6 as an example, the inverter cannot meet connection of more devices, and a smart junction box needs to be used to add more devices, thereby meeting an extension requirement. Specifically, a shutdown instruction is automatically sent to each connected device of the target inverter, so that hardware of the connected device is released and an energy matrix is disconnected. In this way, a related person performs safe operations such as disconnecting a power cable and disconnecting a communication cable, and switches each connected device from the inverter to the BI smart junction box, thereby achieving an effect of ensuring safety of the person and the system without shutting down the inverter.

In a specific implementation, that the operating condition changes further includes occurrence of a transient energy shock. Correspondingly, the adjusting the energy transfer relationship to balance an energy transfer state between the input source device and the load device includes:
switching to another input source device or adjusting an energy configuration parameter of the load device to adjust the energy transfer relationship, to balance the energy transfer state between the input source device and the load device.

The following describes, with reference to several examples, a specific implementation of adjusting an energy transfer relationship when a transient energy shock occurs.
(1) When a load device such as a charging pile, a heat pump, or a smart load stops transiently, and there may be transient surge backflow, a battery is used as a large capacity buffer apparatus to receive transient charges, thereby ensuring that an energy matrix is safe and stable.
(2) When a load device such as a charging pile, a heat pump, or a smart load outputs a large power transiently, and a user is not allowed to obtain electricity from a power grid and a backup power supply is connected, a generator is used as a large capacity buffer apparatus to pull an energy gap to cope with a transient change.
(3) When a load device such as a charging pile, a heat pump, or a smart load outputs a large power transiently, and a user is connected to a power grid to obtain electricity and there is no backup power supply, the system uses the power grid as a large capacity buffer apparatus to pull an energy gap to cope with a transient change.
(4) To cope with a transient change of an adjustable smart load power, when an overload risk is encountered transiently, the load power is adjusted step by step, for example, a power of a charging pile of a vehicle is reduced and a power of a heat pump is reduced, so as to ensure that the device is not shut down and can survive the transient risk safely, and system energy scheduling and control are easier.

The charging pile, the heat pump, and the smart load described above may be used as equivalent devices that have an independent operation mode, and are merely used as some of examples in this application. When an operating condition for device running changes, a device selected for connection changes, a mode is switched, and so on, adjustment of an energy matrix is compatible with a multi-working-condition mode in a complex system, so that energy allocation can be dynamically adjusted, thereby ensuring compatibility and matching of operation modes between devices. Consistency of the energy system of the inverter automatically selects a controllable device as a transient emergency buffer, and all modes and operating conditions can be switched insensitively during operation without requiring power-off or shutdown for switching, and without incurring a potential hazard.

Because hardware can be released and powered off actively and safely in the case of a transient energy shock, switching of a connected device ensures operation safety of a person while the system is running without power-off. This specific implementation is especially applicable to a complex system and switching of a plurality of operating conditions compatible with a plurality of modes of a plurality of connected devices. Safety is high and no additional complex setting is needed, thereby significantly improving user experience, safety, and operation and maintenance efficiency.

In this application, for a case in which energy needs to be re-adjusted due to re-connection of a device or disconnection of a connected device, and the like, requirements for rapid energy switching and fast mode compatibility are met, thereby providing a solution for safe and stable switching of an external connected device of an inverter.

### Embodiment 2

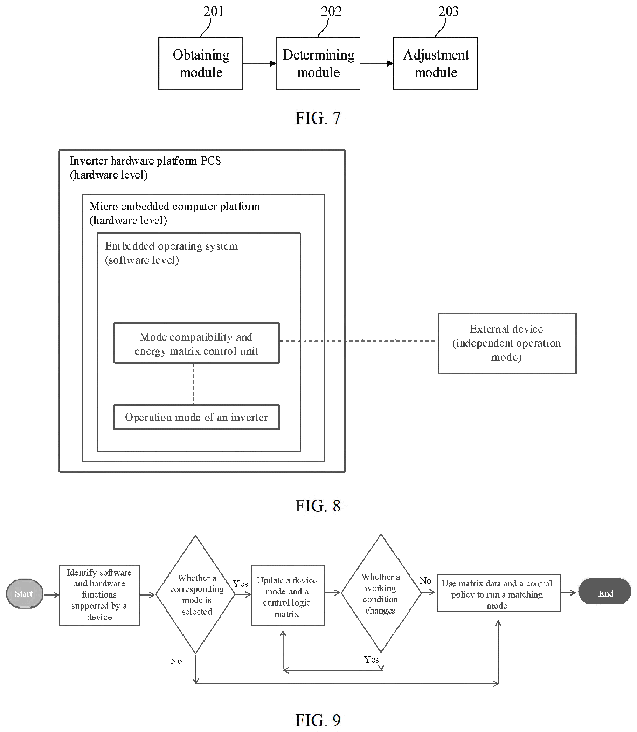

As shown in FIG. 7, this embodiment provides an energy adjustment apparatus, including:
an obtaining module 201, configured to obtain a target operation mode that is set for each connected device of a target inverter, where the connected device includes at least one of an input source device, a load device, and an extended accessory device;
a determining module 202, configured to: perform mode compatibility on the target operation mode of each connected device, and determine an energy transfer relationship among connected devices in the target operation mode; and
an adjustment module 203, configured to: detect whether an operating condition changes during operation of the target operation mode; and when a change in the working condition is detected, adjust the energy transfer relationship to balance an energy transfer state between the input source device and the load device.

In a specific implementation, the input source device includes at least one of a mains supply, a photovoltaic power supply, a battery, and a generator, or includes other clean energy. The load device includes at least one of a charging pile, a heat pump, and a smart load. The extended accessory device includes a smart junction box configured to extend a hardware function of the target inverter, for example, a BI (backup interface, backup interface) smart junction box. During use, the smart junction box may be connected to the input source device, the load device, another inverter, another extended accessory device, and the like, to extend the hardware function of the inverter.

In some specific implementations, the energy adjustment apparatus in this embodiment further includes a detection module, configured to: detect a connected device and a function of the connected device that are supported by the target inverter; and obtain the first operation mode of the target inverter and the second operation mode of each connected device based on the connected device and the function of the connected device that are supported by the target inverter.

After the device is powered on and runs, the system detects software and hardware functions currently supported by the target inverter, and also determines a connected device and a function of the connected device that are supported by the target inverter. Based on a detection result, the system obtains an operation mode of the corresponding connected device, and obtains an operation mode of the target inverter, so as to subsequently perform mode compatibility between the target inverter and the connected device conveniently, thereby avoiding a running abnormality of the energy system due to a mismatch between operation modes configured for the target inverter and the connected device.

In some specific implementations, the energy adjustment apparatus in this embodiment further includes a matching module, configured to: obtain a first operation mode of the target inverter and a second operation mode of each connected device; and perform mode compatibility between the first operation mode and each second operation mode, so that an energy configuration parameter of the first operation mode matches an energy configuration parameter of the second operation mode.

In this embodiment, matching is performed between related energy configuration parameters of operation modes of the target inverter and each connected device, so as to implement mode compatibility. For example, the energy configuration parameters are a power and a timing time period.

In an example, an output power of the target inverter in the first operation mode is 3 kw, and a power required by the charging pile in the second operation mode is 5 kw. After mode compatibility processing, the output power of the target inverter in the first operation mode is matched as the power required by the charging pile in the second operation mode, so as to ensure normal running of the charging pile and ensure energy balance.

In a specific implementation, performing mode compatibility on the target operation mode of each connected device means that when different connected devices are connected to the target inverter, an energy flow direction between the input source device and the load device is determined based on target operation modes of the input source device and the load device that are set by the user, so as to determine an energy transfer relationship between the connected devices in the target operation modes. This energy transfer relationship is referred to as an energy matrix.

In an example, the energy matrix is shown in FIG. 2. Devices such as a mains supply, a generator, a photovoltaic power supply, and a smart junction box are connected to an inverter. A corresponding energy transfer relationship is formed between these devices based on a specified target operation mode.

During actual running, because an operating condition may change or each connected device is switched to an extended accessory device to meet a function extension requirement, the energy matrix may be adjusted accordingly, so that a state of energy transfer between an input source device and a load device is always in a balanced state, thereby implementing quick switching of the energy matrix and avoiding a risk of energy imbalance or overflow. A smart junction box is used as a connected device, and adjustment of the energy matrix is uniformly performed by the inverter, so that scalability of the connected device supported by the inverter is significantly improved, and a quantity or a type of the connected device is no longer limited.

In a specific implementation, that the operating condition changes includes: During energy transfer between the input source device and the load device based on the target operation modes of the input source device and the load device, the load device no longer needs energy.

Using an energy matrix variation shown in FIG. 3 as an example, a photovoltaic power supply PV, a battery, a mains supply, a generator, and a charging pile are connected to the target inverter. A target operation mode of the battery is a self-generation and self-consumption mode, and a target operation mode of the charging pile is a charging precedence mode. In such a target operation mode, the energy matrix is as follows: The battery and the PV charge the charging pile based on a specified power until a vehicle is fully charged. After the vehicle is fully charged, the operating condition changes. In this case, the energy matrix is adjusted as follows: The PV charges the battery, and sends excess power to a power grid.

In a specific implementation, that the operating condition changes further includes: switching of different working states caused by the target operation mode of the input source device during energy transfer between the input source device and the load device based on the target operation modes of the input source device and the load device.

For example, a battery, a mains supply, a generator, and a charging pile are connected to the target inverter. A target operation mode of the battery is a fixed-time charging/discharging mode, and a target operation mode of the charging pile is a green power mode. In such a target operation mode, the energy matrix is as follows: The PV and the power grid fixedly charge the battery, and charge the charging pile by using excess power. When the working state of the battery is changed to fixed discharging, the operating condition changes and the energy matrix is adjusted as follows: The PV and the battery charge the charging pile, and send excess power to the power grid. When the battery is static, the operating condition changes again and the energy matrix is adjusted as follows: Only the PV charges the charging pile.

In a specific implementation, that the operating condition changes further includes: switching of different working states caused by the target operation mode of the load device during energy transfer between the input source device and the load device based on the target operation modes of the input source device and the load device.

Using an energy matrix variation shown in FIG. 4 as an example, a battery, a mains supply, a generator, a charging pile, and a heat pump are connected to the target inverter. A target operation mode of the battery is an off-grid mode, and a target operation mode of the heat pump is a timing mode. In such a target operation mode, an energy matrix is as follows: The battery, the PV, and the generator supply power to the heat pump in a fixed time period, and the generator supplies power to the heat pump only when a power is insufficient. When the timing for the heat pump stops, the operating condition changes. In this case, the energy matrix is adjusted as follows: The generator is turned off, and the PV charges the battery.

When the input source device is abnormal, because the operating condition is abnormal, in this case, the adjusting the energy transfer relationship to balance an energy transfer state between the input source device and the load device includes:
switching to another input source device to adjust the energy transfer relationship, to balance the energy transfer state between the input source device and the load device.

In a specific implementation, that the operating condition changes further includes an abnormality of the input source device.

Using an energy matrix variation shown in FIG. 5 as an example, a battery, a mains supply, a generator, a charging pile, and a heat pump are connected to the target inverter. A target operation mode of the battery is a self-generation and self-consumption mode, a target operation mode of the charging pile is a green power mode, and a target operation mode of the heat pump is a smart load mode in the timing mode. In such a target operation mode, the energy matrix is as follows: The PV and the battery supply power to the charging pile within a fixed time, and the heat pump is enabled when an on-grid power of excess power is greater than a power required in the smart load mode. If there is still excess power, the charging pile is charged by using the excess power. If there is still excess power, the excess power is sent to the power grid. When the power grid is abnormal (for example, power failure, leakage of a device, and disconnection of a circuit breaker), the operating condition changes. In this case, power is supplied by switching to the generator. The PV and the battery supply power to the charging pile within a fixed time, and the heat pump is enabled when a power of excess power is greater than the power required in the smart load mode. If there is still excess power, the charging pile of the vehicle is charged by using the excess power. If there is still excess power, the power of the battery is reduced until the battery is fully charged or the charging of the battery is completed, to pull down the power of the PV.

In a specific implementation, that the operating condition changes further includes switching each connected device from the target inverter to the extended accessory device. Correspondingly, the adjusting the energy transfer relationship to balance an energy transfer state between the input source device and the load device includes: when each connected device needs to be switched from the target inverter to the extended accessory device, sending a shutdown instruction to each connected device, so that each connected device is released, the energy transfer relationship is disconnected, and the target inverter remains in a running state.

Using an energy matrix variation shown in FIG. 6 as an example, the inverter cannot meet connection of more devices, and a smart junction box needs to be used to add more devices, thereby meeting an extension requirement. Specifically, a shutdown instruction is automatically sent to each connected device of the target inverter, so that hardware of the connected device is released and an energy matrix is disconnected. In this way, a related person performs safe operations such as disconnecting a power cable and disconnecting a communication cable, and switches each connected device from the inverter to the BI smart junction box, thereby achieving an effect of ensuring safety of the person and the system without shutting down the inverter.

In a specific implementation, that the operating condition changes further includes occurrence of a transient energy shock. Correspondingly, the adjusting the energy transfer relationship to balance an energy transfer state between the input source device and the load device includes:
switching to another input source device or adjusting an energy configuration parameter of the load device to adjust the energy transfer relationship, to balance the energy transfer state between the input source device and the load device.

The following describes, with reference to several examples, a specific implementation of adjusting an energy transfer relationship when a transient energy shock occurs.
(1) When a load device such as a charging pile, a heat pump, or a smart load stops transiently, and there may be transient surge backflow, a battery is used as a large capacity buffer apparatus to receive transient charges, thereby ensuring that an energy matrix is safe and stable.
(2) When a load device such as a charging pile, a heat pump, or a smart load outputs a large power transiently, and a user is not allowed to obtain electricity from a power grid and a backup power supply is connected, a generator is used as a large capacity buffer apparatus to pull an energy gap to cope with a transient change.
(3) When a load device such as a charging pile, a heat pump, or a smart load outputs a large power transiently, and a user is connected to a power grid to obtain electricity and there is no backup power supply, the system uses the power grid as a large capacity buffer apparatus to pull an energy gap to cope with a transient change.
(4) To cope with a transient change of an adjustable smart load power, when an overload risk is encountered transiently, the load power is adjusted step by step, for example, a power of a charging pile of a vehicle is reduced and a power of a heat pump is reduced, so as to ensure that the device is not shut down and can survive the transient risk safely, and system energy scheduling and control are easier.

The charging pile, the heat pump, and the smart load described above may be used as devices that have an independent operation mode, and are merely used as some of examples in this application. When an operating condition for device running changes, a device selected for connection changes, a mode is switched, and so on, adjustment of an energy matrix is compatible with a multi-working-condition mode in a complex system, so that energy allocation can be dynamically adjusted, thereby ensuring compatibility and matching of operation modes between devices. Consistency of the energy system of the inverter automatically selects a controllable device as a transient emergency buffer, and all modes and operating conditions can be switched insensitively during operation without requiring power-off or shutdown for switching, and without incurring a potential hazard.

Because hardware can be released and powered off actively and safely in the case of a transient energy shock, switching of a connected device ensures operation safety of a person while the system is running without power-off. This specific implementation is especially applicable to a complex system and switching of a plurality of operating conditions compatible with a plurality of modes of a plurality of connected devices. Safety is high and no additional complex setting is needed, thereby significantly improving user experience, safety, and operation and maintenance efficiency.

In this application, for a case in which energy needs to be re-adjusted due to re-connection of a device or disconnection of a connected device, and the like, requirements for rapid energy switching and fast mode compatibility are met, thereby providing a solution for safe and stable switching of an external connected device of an inverter.

It should be noted that all modules used in this embodiment are logical modules. In actual application, one logical unit may be one physical unit, may be a part of one physical unit, or may be implemented by a combination of a plurality of physical units. In addition, to highlight the innovative part of this application, in this embodiment, units that are not closely related to resolving the technical problem proposed in this application are not introduced. However, this does not mean that no other units exist in this embodiment.

### Embodiment 3

This embodiment provides an inverter, including:
at least one processor; and
a memory communicatively connected to the at least one processor, where
the memory stores instructions that are executable by the at least one processor, and the instructions are executed by the at least one processor, to enable the at least one processor to perform the energy adjustment method in the foregoing embodiments.

The memory is connected to the processor by using a bus. The bus may include any quantity of interconnected buses and bridges. The bus connects various circuits of one or more processors and the memory. The bus may further connect various other circuits such as a peripheral device, a voltage regulator, and a power management circuit together, which are well-known in the art. Therefore, the bus is not further described in this specification. A bus interface provides an interface between the bus and a transceiver. The transceiver may be one element, or may be a plurality of elements, such as a plurality of receivers and transmitters, and provides units configured to communicate with various other apparatuses on a transmission medium. Data processed by the processor is transmitted on a wireless medium by using an antenna. Further, the antenna further receives data and transmits the data to the processor.

The processor is responsible for managing the bus and common processing, and may further provide various functions, including timing, a peripheral interface, voltage regulation, power management, and other control functions. The memory may be configured to store data used by the processor when performing an operation.

FIG. 8 is a schematic diagram of embedding of software and hardware platforms. The method or the apparatus in the foregoing embodiments may be implemented as a mode compatibility and energy matrix control unit by using a computer program, and is applied to an embedded operating system of an inverter. Specifically, the inverter is used as a hardware computer platform, an embedded operating system is provided on this hardware platform, and matching is performed between a plurality of operation modes of a plurality of supported connected devices and the operation mode of the inverter.

### Embodiment 4

This embodiment provides a computer-readable storage medium, storing a computer program, where the computer program is executed by a processor to implement the energy adjustment method in the foregoing embodiments.

A person skilled in the art may understand that all or some of the steps of the methods in the foregoing embodiments may be implemented by a program instructing related hardware. The program is stored in a storage medium and includes several instructions for enabling a device (which may be a single-chip microcomputer, a chip, or the like) or a processor (processor) to perform all or some of the steps of the methods in the embodiments of this application. The foregoing storage medium includes various media that can store program code, for example, a USB flash drive, a removable hard disk, a read-only memory (Read-Only Memory, ROM for short), a random access memory (Random Access Memory, RAM for short), a magnetic disk, or an optical disc.

In an example, the energy adjustment method in the foregoing embodiments may be implemented by executing a flowchart shown in FIG. 9, including: identifying software and hardware functions supported by an inverter device; determining whether a corresponding mode is selected, and updating an operation mode and an energy matrix of the device based on the selected mode; and determining whether an operating condition changes, and if yes, updating the operation mode and the energy matrix of the device; otherwise, using energy matrix data and a control policy to run a matching mode.

The foregoing descriptions are merely optional embodiments of this application, and are not intended to limit this application. A person skilled in the art may make various changes and variations to this application. Any modification, equivalent replacement, improvement, and the like made within the spirit and principle of this application shall be included in the scope of the claims of this application.

## Claims

1. An energy adjustment method, comprising:
obtaining a target operation mode that is set for each connected device of a target inverter, wherein the connected device comprises at least one of an input source device, a load device, and an extended accessory device;
performing mode compatibility on the target operation mode of each connected device, and determining an energy transfer relationship among connected devices in the target operation mode;
detecting whether an operating condition changes during operation of the target operation mode; and
when a change in the working condition is detected, adjusting the energy transfer relationship to balance an energy transfer state between the input source device and the load device.

2. The energy adjustment method according to claim 1, further comprising:
obtaining a first operation mode of the target inverter and a second operation mode of each connected device; and
performing mode compatibility between the first operation mode and each second operation mode, so that an energy configuration parameter of the first operation mode matches an energy configuration parameter of the second operation mode.

3. The energy adjustment method according to claim 2, further comprising:
detecting a connected device and a function of the connected device that are supported by the target inverter; and
obtaining the first operation mode of the target inverter and the second operation mode of each connected device based on the connected device and the function of the connected device that are supported by the target inverter.

4. The energy adjustment method according to claim 1, wherein the input source device comprises at least one of a mains supply, a photovoltaic power supply, a battery, and a generator; the load device comprises at least one of a charging pile, a heat pump, and a smart load; and the extended accessory device comprises a smart junction box configured to extend a hardware function of the target inverter.

5. The energy adjustment method according to claim 4, wherein a case in which the operating condition changes comprises an abnormality of the input source device; and
the adjusting the energy transfer relationship to balance an energy transfer state between the input source device and the load device comprises:
switching to another input source device to adjust the energy transfer relationship, to balance the energy transfer state between the input source device and the load device.

6. The energy adjustment method according to claim 4, wherein a case in which the operating condition changes comprises switching each connected device from the target inverter to the extended accessory device; and
the adjusting the energy transfer relationship to balance an energy transfer state between the input source device and the load device comprises:
sending a shutdown instruction to each connected device, so that each connected device is released, the energy transfer relationship is disconnected, and the target inverter remains in a running state.

7. The energy adjustment method according to claim 4, wherein a case in which the operating condition changes comprises occurrence of a transient energy shock; and
the adjusting the energy transfer relationship to balance an energy transfer state between the input source device and the load device comprises:
switching to another input source device or adjusting an energy configuration parameter of the load device to adjust the energy transfer relationship, to balance the energy transfer state between the input source device and the load device.

8. An energy adjustment apparatus, comprising:
an obtaining module, configured to obtain a target operation mode that is set for each connected device of a target inverter, wherein the connected device comprises at least one of an input source device, a load device, and an extended accessory device;
a determining module, configured to: perform mode compatibility on the target operation mode of each connected device, and determine an energy transfer relationship among connected devices in the target operation mode; and
an adjustment module, configured to: detect whether an operating condition changes during operation of the target operation mode; and when a change in the working condition is detected, adjust the energy transfer relationship to balance an energy transfer state between the input source device and the load device.

9. An inverter, comprising:
at least one processor; and
a memory communicatively connected to the at least one processor, wherein
the memory stores instructions that are executable by the at least one processor, and the instructions are executed by the at least one processor, to enable the at least one processor to perform the energy adjustment method according to any one of claims 1 to 7.

10. A computer-readable storage medium, storing a computer program, wherein the computer program is executed by a processor to implement the energy adjustment method according to any one of claims 1 to 7.
